# EUROPÄISCHE PATENTANMELDUNG

(11) **EP 3 738 428 A1**
(43) Veröffentlichungstag der Anmeldung: **18.11.2020**
(21) Anmeldenummer: 20156365.7
(22) Anmeldetag: 10.02.2020
(51) Int. Cl.: A01D 43/08, A01F 29/22

(54) **FAHRERASSISTENZSYSTEM EINES FELDHÄCKSLERS**

(30) Priorität: 16.05.2019 DE 102019112973; 16.05.2019 DE 102019112968; 01.07.2019 DE 102019112965
(71) Anmelder: CLAAS Selbstfahrende Erntemaschinen GmbH, 33428 Harsewinkel (DE)
(72) Erfinder: Heitmann, Christoph, 48231 Warendorf (DE); Neitemeier, Dennis, 59510 Lippetal (DE); Brune, Markus, 33428 Harsewinkel (DE); Huster, Jochen, 33330 Gütersloh (DE); Fischer, Frédéric, 59823 Arnsberg (DE); Stremlau, Björn, 49509 Recke (DE)
(74) Vertreter: CLAAS Gruppe

(57) **Zusammenfassung**

Die Erfindung betrifft ein Fahrerassistenzsystem (80) einer als Feldhäcksler (2) ausgeführten landwirtschaftlichen Arbeitsmaschine (1), wobei die landwirtschaftliche Arbeitsmaschine (1) einen Erntevorsatz (3) zur Aufnahme von Erntegut (5), eine Häckseleinrichtung (6) zumindest bestehend aus einer Häckseltrommel (7) und dieser zugeordneten Häckselmessern (8) zum Zerkleinern des Erntegutes (5), und eine Überwachungseinrichtung (92) umfasst, wobei die Überwachungseinrichtung (92) betreibbar ist, ein Signal zu erzeugen, das zumindest eine Information (I) über den Verschleißzustand (39) des jeweiligen Häckselmessers (8) und/oder dem Abstand (88) der Schneidkante (24) eines Häckselmessers (8) zu einer Gegenschneide (11) enthält, wobei weiter die Information (I) zum Verschleißzustand (39) der Häckselmesser (8) und/oder der Abstand (88) der Schneidkante (24) eines Häckselmessers (8) zur Gegenschneide (11) mit jeweils einem Sollwert (66,94) verglichen wird und wobei die landwirtschaftliche Arbeitsmaschine (1) weiter Aktivierungseinrichtungen zur Aktivierung und Deaktivierung eines Messerschleifvorganges (70) und Mittel zur Positionsänderung (97) der Gegenschneide (11) umfasst und die Überwachungseinrichtung (92) in der Weise in das Fahrerassistenzsystem (80) integriert ist, dass das Fahrerassistenzsystem (80) selbsttätig erkennt wann ein Messerschleifvorgang (96) aktiviert oder deaktiviert werden muss und/oder eine Positionsänderung (97) der Gegenschneide (11) zu aktivieren oder deaktivieren ist.

## Beschreibung

Die Erfindung betrifft ein Fahrerassistenzsystem einer als Feldhäcksler ausgeführten landwirtschaftlichen Arbeitsmaschine zur Überwachung des Verschleißzustandes von Häckselmessern nach dem Oberbegriff des Anspruchs 1.

Aus der DE 10 2017 103 537 ist zunächst eine Sensoranordnung bekannt geworden, die mittels induktiver Sensoren die umlaufenden Messer einer Häckseltrommelanordnung detektiert und aus dem ermittelten magnetischen Fluss einen Verschleißzustand der Häckselmesser ableitet, wobei sich der Verschleiß aus der jeweils induzierten Spannung ergibt.

Zudem ist u.a. aus EP 1 522 214 eine ähnliche Schneidschärfendetektionseinrichtung bekannt geworden, wobei hier als Detektionseinrichtungen optische Sensoren wie Kamerasysteme, Laser und Nahinfrarotsensoren zum Einsatz kommen.

Optische Sensoren haben insbesondere das Problem, dass die Schneidkantenanalyse aufgrund der hohen Umlaufgeschwindigkeiten der Häckselmesser erschwert wird, was häufig zu qualitativ unzureichenden Analyseergebnissen führt. Demgegenüber wird die Analyse einer induzierten Spannung deutlich weniger von den hohen Umlaufgeschwindigkeiten der zu detektierenden Häckselmesser beeinflusst. Mitunter führen jedoch die ausschließlich auf die induzierte Spannung gerichteten Auswertverfahren nicht zu einer hinreichend genauen Abschätzung eines Verschleißzustandes.

Weiter ist aus der DE 10 2018 106 915.4 ein mit einem Fahrerassistenzsystem ausgestatteter Feldhäcksler bekannt geworden, dessen Arbeitsorgane als sogenannte Einstellautomaten strukturiert sind, die mittels des Fahrerassistenzsystems in der Weise ansteuerbar sind, dass die Arbeitsparameter des Feldhäckslers optimiert werden können, ohne das der Bediener des Feldhäckslers in diesen Prozess involviert sein muss. Dies hat insbesondere den Effekt, dass der Bediener nicht mehr selbst eine Überwachung der Arbeitsqualität des Feldhäckslers übernehmen muss.

Nachteilig ist hier, dass das bekannte Fahrerassistenzsystem nicht so beschaffen ist, dem Bediener der landwirtschaftlichen Arbeitsmaschine den Prozess des Schleifens der Häckselmesser abzunehmen.

Es ist deshalb Aufgabe der Erfindung, die beschriebenen Nachteile des Standes der Technik zu vermeiden und insbesondere ein Fahrerassistenzsystem in einer Weise zu befähigen, dass es den Verschleißzustand von Häckselmessern überwachen kann.

Diese Aufgabe wird erfindungsgemäß durch die kennzeichnenden Merkmale des Anspruchs 1 gelöst.

Indem das Fahrerassistenzsystem einer als Feldhäcksler ausgeführten landwirtschaftlichen Arbeitsmaschine eine Überwachungseinrichtung umfasst und die Überwachungseinrichtung in der Weise in das Fahrerassistenzsystem integriert ist, dass das Fahrerassistenzsystem selbsttätig erkennt wann ein Messerschleifvorgang aktiviert oder deaktiviert werden muss und/oder eine Positionsänderung der Gegenschneide zu aktivieren oder deaktivieren ist, wird sichergestellt, dass ein Messerschleifvorgang und eine Positionsänderung der Gegenschneide unabhängig von der Überwachung und Beurteilung durch den Bediener wird, was insbesondere den Effekt hat, dass der Messerschleifvorgang auf das notwenige Maß beschränkt wird.

In einer vorteilhaften Ausgestaltung der Erfindung aktiviert oder deaktiviert das Fahrerassistenzsystem den Messerschleifvorgang und/oder die Positionsänderung der Gegenschneide selbsttätig oder generiert an einen Bediener der landwirtschaftlichen Arbeitsmaschine einen Hinweis zur Aktivierung oder Deaktivierung des Schleifvorgangs und/oder der Positionsänderung der Gegenschneide, sodass der Bediener vollständig von Überwachungsaufgaben bezüglich der Schneidschärfe der Häckselmesser entlastet ist. Weiterhin werden für den Fahrer der Maschine Hinweise über den Zustand der Messer geliefert.

Indem in einer vorteilhaften Weiterbildung der Erfindung die von der Überwachungseinrichtung generierten Signale, die eine Information über den Verschleißzustand des jeweiligen Häckselmessers und/oder den Abstand der Schneidkante eines Häckselmessers zu einer Gegenschneide enthalten in einen Schneidschärfen-Istwert und einen Abstandsistwert der Gegenschneide umgerechnet werden und der jeweilige Istwert mit dem hinterlegten zugehörigen Sollwert verglichen wird und bei Unterschreitung des Sollwertes "scharfes Messer" oder bei Überschreitung des Abstandssollwertes der Messerschleifvorgang oder die Positionsänderung der Gegenschneide aktiviert werden wird sichergestellt, dass die Häckselmesser stets in einem scharfen Zustand gehalten werden, was neben einer hohen Häckselqualität zu einem optimierten Kraftstoffverbrauch führt.

Um den Schleifvorgang auf das notwendige Maß zu begrenzen ist in einer weiteren vorteilhaften Ausgestaltung vorgesehen, dass die von der Überwachungseinrichtung generierten Signale, die eine Information über den Verschleißzustand des jeweiligen Häckselmessers und/oder den Abstand der Schneidkante eines Häckselmessers zu einer Gegenschneide enthalten in einen Schneidschärfen-Istwert und einen Abstandsistwert der Gegenschneide umgerechnet werden und der jeweilige Istwert mit dem hinterlegten zugehörigen Sollwert verglichen wird und bei Erreichen oder Überschreitung des Sollwertes "scharfes Messer" oder bei Erreichen oder Unterschreitung des Abstandssollwertes der Messerschleifvorgang oder die Positionsänderung der Gegenschneide deaktiviert werden.

Um erntegutabhängige Auswirkungen auf den Verschleiß der Häckselmesser besser berücksichtigen zu können, ist in einer weiteren vorteilhaften Ausgestaltung der Erfindung vorgesehen, dass der Sollwert "scharfes Messer" und der Abstandssollwerte der Gegenschneide erntegutartabhängig geändert werden können.

Eine hohe Präzision der Schneidschärfenüberwachung wird in einer vorteilhaften Weiterbildung der Erfindung dadurch erreicht, dass die Überwachungseinrichtung für jedes Häckselmesser die Schneidschärfe und/oder den Verschleißzustand und/oder die Größe des Schneidspaltes überwacht.

Aufgrund dessen, dass eine ungleichmäßige Gutzufuhr zur Häckseltrommel den Verschleiß der Häckselmesser erheblich beeinflusst ist in einer weiteren vorteilhaften Ausgestaltung vorgesehen, dass aus den von der Überwachungseinrichtung generierten Abstandsignalen ein Radius der Häckseltrommel ermittelt wird. Dies hat den Effekt, dass aus der Änderung des Radius der Häckseltrommel auf einen ungleichförmigen Verschleiß und damit auf eine ungleichförmige Gutzufuhr zur Häckseltrommel geschlossen werden kann. In diesem Zusammenhang ist es zudem von Vorteil, wenn aus den von der Überwachungseinrichtung generierten Signalen, vorzugsweise der abgeleiteten Änderung des Radius der Häckseltrommel auf einen gutzufuhrbedingten Verschleißzustand geschlossen wird und Maßnahmen abgeleitet werden, eine verschleißmindernde Gutzufuhr zu bewirken. Im einfachsten Fall kann die verschleißmindernde Gutzufuhr dadurch bewirkt werden, dass in einer vorteilhaften Ausgestaltung der Erfindung die abgeleiteten Maßnahmen eine Änderung eines oder mehrerer Parameter des Erntevorsatzes zur Aufnahme von Erntegut und/oder diesem nachgeordneten Einzugs- und Vorpresswalzen beinhalten.

Indem aus den von der Überwachungseinrichtung generierten Signalen die Anzahl der auf einer Häckseltrommel positionierten Häckselmesser ermittelt wird und die Konfiguration der Häckseltrommel in dem Fahrerassistenzsystem automatisch bewirkt wird, wird zudem sichergestellt, dass der Bediener weitgehend von Konfigurationsaufwand entlastet ist.

Indem die Erfassungsanordnung zur Erfassung eines Verschleißzustands einer Häckselmesseranordnung einer zur Verarbeitung eines Gutstroms vorgesehenen Häckseleinrichtung als induktive Erfassungsanordnung ausgeführt ist und die beim Überstreichen der Sensoranordnung durch eine Häckselmesseranordnung induzierte Spannung die magnetische Messgröße bildet und die Erfassungsanordnung die induzierte Spannung ermittelt und als Spannungssignal aufzeichnet und eine Auswerteeinheit aus der mindestens einen erfassten Messgröße den Verschleißzustand des jeweiligen Häckselmessers ermittelt wir auf einfache Weise sichergestellt, dass der Verschleißzustande jedes Häckselmessers individuell ermittelbar ist.

In einer weiteren vorteilhaften Ausgestaltung der Erfindung wird das Spannungssignal in der Auswerteinheit mittels Frequenzanalyse in seine Frequenzanteile zerlegt, wobei die Frequenzanteile in Frequenzanteile einer Grundschwingung und in Signalverzerrungen bewirkende Frequenzanteile einer überlagernden Schwingung separiert werden, und die separierten, eine Signalverzerrung bewirkenden Frequenzanteile der überlagernden Schwingung in den Zeitbereich rücktransformiert werden und aus den rücktransformierten Frequenzanteilen der überlagernden Schwingung ein Maß für den Verschleißzustand und/oder die Schneidschärfe eines Häckselmessers abgeleitet wird, sodass mit einfachen Maßnahmen die Erfassung des Verschleißzustandes von Häckselmessern verbessert werden kann.

Indem eine Sensoranordnung oder die mehreren Sensoranordnungen so am Umfang der Häckseltrommel positioniert sind, dass jedes Häckselmesser der Häckseltrommel durch eine Sensoranordnung detektiert wird, wird sichergestellt, dass jedes am Umfang der Häckseltrommel positionierte Häckselmesser detektiert werden kann. Dieser Effekt wird in einer weiteren vorteilhaften Ausgestaltung auch dadurch erreicht, dass der Häckseltrommel rechts- und linksseitige Häckselmesseranordnungen zugeordnet sind und jeder dieser Häckselmesseranordnungen zumindest eine Sensoranordnung zugeordnet ist.

Eine hochaufgelöste und damit sehr genaue Analyse des Verschleißzustandes bzw. der Messerschärfe wird in einer vorteilhaften Weiterbildung der Erfindung dadurch erreicht, dass jeder Sensoranordnung eine Vielzahl von Induktionssensoren, vorzugsweise 5 Induktionssensoren, zugeordnet sind und jeder Induktionssensor ein Spannungssignal generiert, wobei vorzugsweise jedes der generierten Spannungssignale separat analysiert wird und wobei weiter vorzugsweise mehrere oder alle Spannungssignale eines detektierten Häckselmessers vor einer Analyse zu einem oder mehreren Spannungssignalen zusammengefasst werden.

Indem in einer vorteilhaften Weiterbildung der Erfindung mittels Fourier-Analyse das jeweilige Spannungssignal in Frequenzanteile einer Grundschwingung und Signalverzerrungen bewirkende Frequenzanteile einer überlagernden Schwingung klassifiziert wird und die die Grundschwingung repräsentierenden Frequenzanteile bei der Ableitung des Verschleißzustandes und/oder der Schneidschärfe des jeweiligen Häckselmessers nicht berücksichtigt werden, wird sichergestellt, dass nur diejenigen Frequenzanteile berücksichtigt werden, die sich in Abhängigkeit vom Verschleiß der Häckselmesser signifikant ändern und damit als Indikator für die Qualifizierung des Verschleißes bzw. der Messerschärfe geeignet sind. Eine besonders vorteilhafte Ausgestaltung ergibt sich in diesem Zusammenhang, wenn die Amplitude des jeweiligen Spannungssignals der eine Signalverzerrung bewirkenden Frequenzanteile berücksichtigt wird, da diese ein Maß für die Beurteilung des Verschleißzustandes und/oder der Schneidschärfe des jeweiligen Häckselmessers ist und auf einfache Weise ermittelbar ist.

Eine besonders wirkungsvolle Überwachung des Verschleißzustandes bzw. der Häckselmesserschärfe, insbesondere mit Blick auf unterschiedliche an den Häckselmessern auftretende Verschleißarten, wird in einer vorteilhaften Weiterbildung der Erfindung dann möglich, wenn die Beurteilung der Schneidschärfe mittels Bewertungskriterien erfolgt, wobei die Bewertungskriterien eines oder mehrere der Bewertungskriterien "Schleifflächenlänge des jeweiligen Häckselmessers", "Rundheit der Häckselmesserspitze", "allgemeiner Messerverschleiß" und/oder "Balligkeit des Häckselmessers" bzw. "relativer Abstand der Gegenschneide zum Häckselmesser" sind.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: einen Feldhäcksler mit erfindungsgemäßer Schneidschärfendetektionseinrichtung
- Figur 2: eine Detailansicht des Feldhäckslers nach Figur 1 mit erfindungsgemäßer Schneidschärfendetektionseinrichtung
- Figur 3: eine Detailansicht der induktiven Sensoranordnung
- Figur 4: eine schematische Ansicht der erfindungsgemäßen Frequenzanalyse
- Figur 5: eine Detaildarstellung der erfindungsgemäßen Frequenzanalyse
- Figur 6: eine weitere Detaildarstellung der erfindungsgemäßen Frequenzanalyse
- Figur 7: eine schematische Darstellung einer Anwendung der erfindungsgemäßen Frequenzanalyse
- Figur 8: eine schematische Darstellung des erfindungsgemäßen Fahrerassistenzsystems
- Figur 9: eine Detaildarstellung des erfindungsgemäßen Fahrerassistenzsystems nach Figur 8

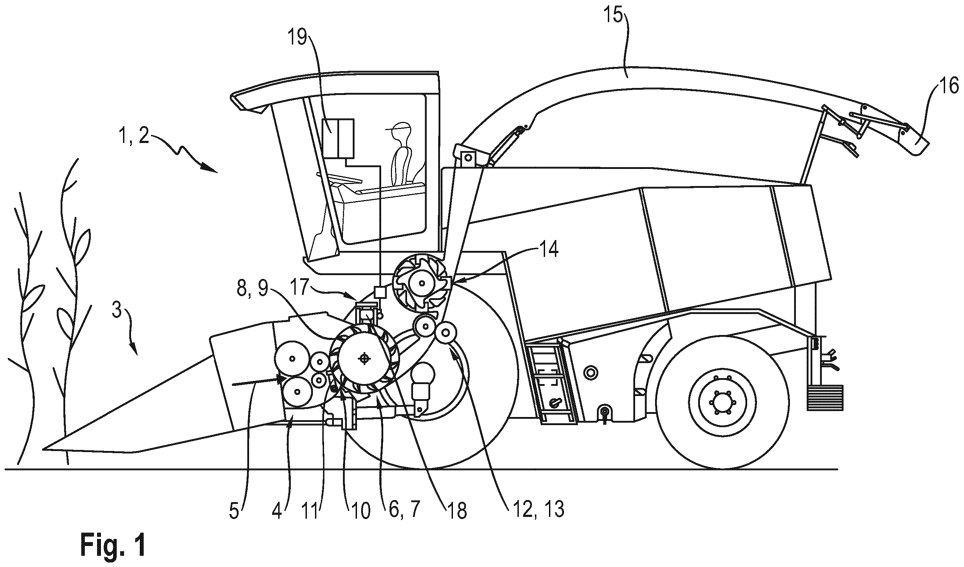

Figur 1 zeigt schematisch eine als Feldhäcksler 2 ausgeführte landwirtschaftliche Arbeitsmaschine 1, die in ihrem frontseitigen Bereich einen Erntevorsatz 3 aufnimmt. Im rückwärtigen Bereich des Erntevorsatzes 3 sind diesem sogenannte Einzugs- und Vorpresswalzen 4 zugeordnet, die den Erntegutstrom 5 aus dem Erntevorsatz 3 kommend annehmen, verdichten und in ihrem rückwärtigen Bereich an eine Häckseleinrichtung 6 übergeben. In noch näher zu beschreibender Weise umfasst die Häckseleinrichtung 6 eine Häckseltrommel 7, die mit Häckselmessern 8 einer Häckselmesseranordnung 9 bestückt ist. Die umlaufenden Häckselmesser 8 werden im Einzugsbereich 10 der Häckseltrommel 7 an einer sogenannten Gegenschneide 11, über die der zu zerkleinernde Erntegutstrom 5 gefördert wird, vorbeibewegt. Im rückwärtigen Bereich der Häckseltrommel 7 wird das zerkleinerte Erntegut 5 sodann entweder an eine als sogenannter Cracker 12 ausgeführte Nachzerkleinerungseinrichtung 13 oder direkt an eine Nachbeschleunigungseinrichtung 14 übergeben. Während die Nachzerkleinerungseinrichtung 13 die körnigen Bestandteile des Erntegutstromes 5, etwa Maiskörner, weiter zerkleinert beschleunigt der Nachbeschleuniger 14 den Erntegutstrom 5 in einer Weise, dass dieser durch einen Auswurfkrümmer 15 bewegt und endseitig im Bereich einer Auswurfklappe 16 aus dem Feldhäcksler 2 austreten und an ein nicht dargestelltes Transportfahrzeug übergeben werden kann. Zudem ist der Häckseltrommel 7 umfangseitig eine an sich bekannte und daher hier nicht im Detail beschriebene Messerschleifeinrichtung 17 zugeordnet, deren Schleifstein 18 horizontal über die Breite der Häckseltrommel 7 bewegbar ist, sodass jedes am Umfang der Häckseltrommel 7 positionierte Häckselmesser 8 schleifbar ist. Zwecks Aktivierung oder Deaktivierung des Messerschleifvorganges ist der Messerschleifeinrichtung 17 eine noch näher zu beschreibende Aktivierungseinrichtung 19 zugeordnet.

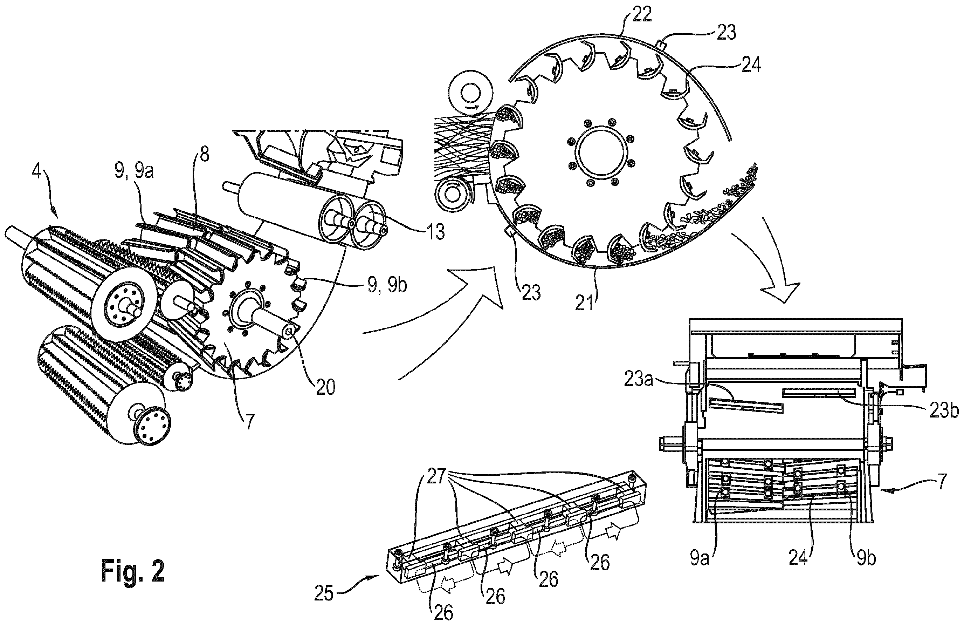

Gemäß Figur 2 umfasst die Häckselmesseranordnung 9 rechts- und linksseitige Häckselmesseranordnungen 9a, 9b, wobei jede Häckselmesseranordnung 9a, 9b eine Vielzahl am Umfang der Häckseltrommel 7 schräg zur Drehachse 20 der Häckseltrommel 7 positionierte Häckselmesser 8 umfasst. Die Häckseltrommel 7 wird untenseitig von einem vorzugsweise aus Edelstahl bestehenden Trommelboden 21 ummantelt. Obenseitig wird die Häckseltrommel 7 von einer vorzugsweise ebenfalls aus Edelstahl bestehenden Trommelrückwand 22 umschlossen. Die erfindungsgemäße und im Folgenden noch näher zu beschreibende Sensoranordnung 23 kann gemäß dem in Figur 2 dargestellten Ausführungsbeispiel entweder an der Trommelrückwand 22 oder am Trommelboden 21 positioniert sein. Es ist auch denkbar, dass zugleich sowohl am Trommelboden 21 als auch an der Trommelrückwand 22 eine Sensoranordnung 23 angeordnet ist. Unabhängig von der konkreten Positionierung sind jeder Häckseltrommel 7 zumindest 2 Sensoranordnungen 23a, 23b in der Weise zugeordnet, dass jeweils eine der Sensoranordnungen 23a, 23b der jeweils zugehörigen Häckselmesseranordnung 9a, 9b zugeordnet ist, wobei jede Sensoranordnung 23a, 23b die Schneidkante 24 des jeweiligen Häckselmessers 7 vollständig überdeckt, sodass jede Schneidkante 24 über ihrer gesamten Länge durch die jeweilige Sensoranordnung 23a, 23b detektiert werden kann. Weiter liegt es im Rahmen der Erfindung, dass die jeweilige Sensoranordnung 23a, 23b entweder parallel zur Drehachse 20 der Häckseltrommel 7 oder parallel zur Schneidkante 24 der Häckselmesser 8 am Trommelboden 21 und/oder der Trommelrückwand 22 positioniert ist. Die rechte untere Darstellung in Figur 2 zeigt nur beispielhaft die möglichen Ausrichtungen der Sensoranordnungen 23a, 23b in einer einzigen Darstellung. Vorzugsweise werden alle Sensoranordnungen 23a, 23b entweder parallel zur Drehachse 20 der Häckseltrommel 7 oder parallel zur Schneidkante 24 der Häckselmesser 8 positioniert sein. Im dargestellten Ausführungsbeispiel sind die Sensoranordnungen 23a, 23b als im Folgenden noch näher zu beschreibende Induktionssensoren 25 ausgeführt, wobei jede Sensoranordnung 23 ein oder mehrere magnetische Erregeranordnungen 26 sowie jeweils eine mit diesen zusammenwirkende Polanordnung 27 umfasst.

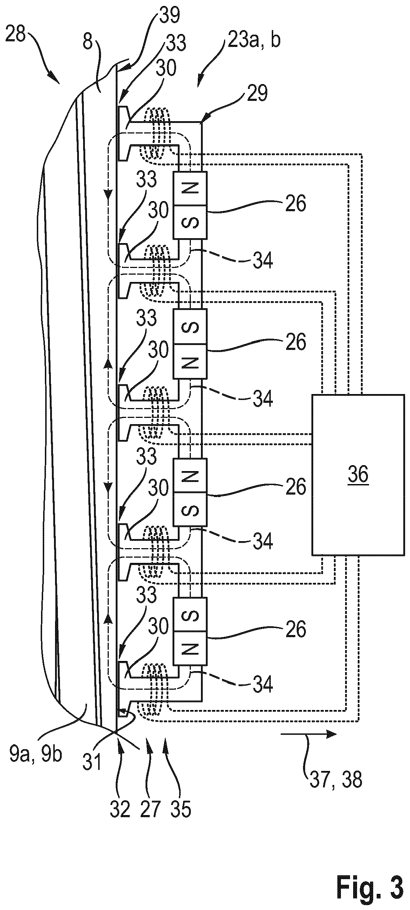

Figur 3 erläutert einige Eigenschaften der Sensoranordnungen 23a, 23b, wobei sich die weiteren Details zu den Sensoranordnungen aus der DE 10 2017 103 537 A1 ergeben, auf deren Offenbarungsgehalt hiermit vollumfänglich Bezug genommen wird. Die erfindungsgemäße Erfassungsanordnung 28 zur Erfassung eines Verschleißzustandes einer Häckselmesseranordnung 9a, 9b umfasst eine Vielzahl von Sensoranordnungen 23a, 23b, vorzugsweise für jede Häckselmesseranordnung 9a, 9b eine. Jede Sensoranordnung 23a, 23b wird von einer Vielzahl magnetischer Erregeranordnungen 26 gebildet, die mit einer Flussleiteinrichtung 29 gekoppelt sind. Die jeweilige Sensoranordnung 23a, 23b stellt jeweils eine Polanordnung 27 bereit, die mindestens einen magnetischen Pol 30, vorzugsweise fünf magnetische Pole 30, mit jeweils einer Polfläche 31 zum Ausleiten von Magnetfluss ausbildet. Bei einer Drehung der Häckseltrommel 7 passiert ein Häckselmesser 8 die jeweilige Polanordnung 27, wobei das die Polanordnung 27 jeweils passierende Häckselmesser 8 eine Luftspaltanordnung 32 mit mindestens einem Luftspalt 33 zu der Polanordnung 27 hin ausbildet und dadurch mindestens ein von der Erregeranordnung 26 erregter Magnetkreis 34 über das jeweilige Häckselmesser 8 geschlossen wird. Die Erfassungsanordnung 28 weist zudem eine Messanordnung 35 und eine Auswerteeinheit 36 auf. In noch näher zu erläuternden Weise erfasst die Messanordnung 35 mindestens eine magnetische Messgröße 37 betreffend den Magnetfluss, vorzugsweise eine induzierte Spannung 38, in mindestens einem von der Erregeranordnung 26 erregten Magnetkreis 34 und die Auswerteeinheit 36 ermittelt aus der mindestens einen erfassten Messgröße 37 den Verschleißzustand 39 des jeweiligen Häckselmessers 8.

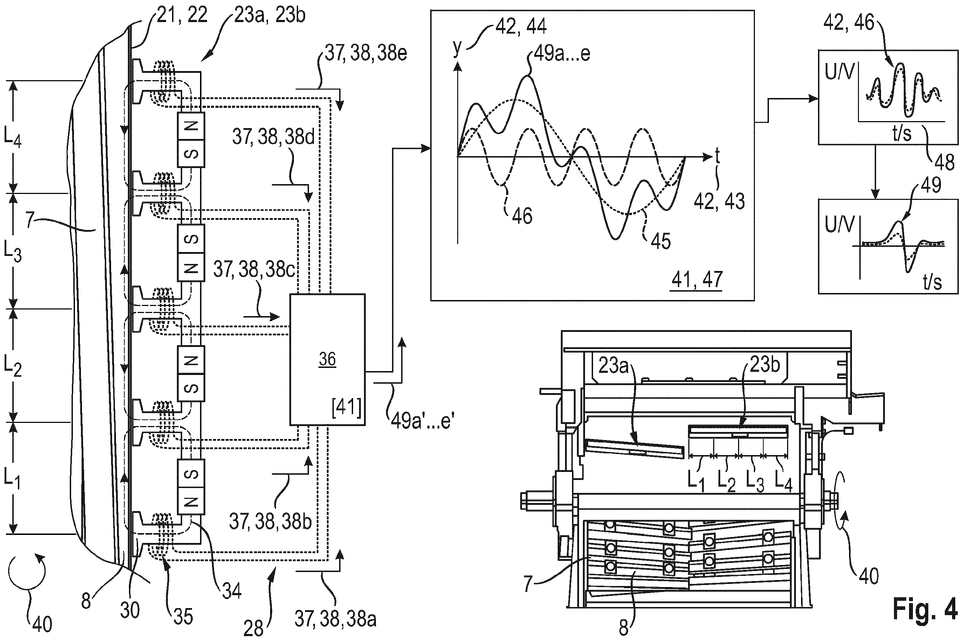

Figur 4 beschreibt nun Details der Messvorrichtung. Im Betrieb der Häckseltrommel 7 werden die Häckselmesser 8 gemäß der Drehrichtung 40 der Häckseltrommel 7 an der jeweiligen Sensoranordnung 23a, 23b vorbeigeführt. Aufgrund der nahezu unmagnetischen Eigenschaften der vorzugsweise aus Edelstahl bestehenden Trommelrückwand 22 oder des Trommelbodens 21 durchdringen die von benachbarten magnetischen Polen 30 gebildeten Magnetkreise 34 das jeweils die Sensoranordnung 23a, 23b überstreichende Häckselmesser 8. Im dargestellten Ausführungsbeispiel bilden sich zwischen den fünf Polen 30 vier Magnetkreise 34 aus, die das jeweilige Häckselmesser in vier Abschnitten L1 bis L4 durchdringen. Für jeden dieser Abschnitte L1 bis L4 wird in der diesem zugeordneten Messanordnung 35 eine Spannung 38, die magnetische Messgröße 37, induziert. Die der Erfassungsanordnung 28 zugeordnete Auswerteinheit 36 ermittelt jeweils die abschnittsweise Induktionsspannung 38a-e und zeichnet diese auf. In diesem Zusammenhang liegt es im Rahmen der Erfindung, dass die jeweilige Sensoranordnung 23 mehr oder weniger als die offenbarten fünf magnetischen Pole 30 aufweist, sodass sich auch mehr oder weniger als die fünf induzierten Spannungen 38a-e ergeben können. Es liegt auch im Rahmen der Erfindung, dass die Spannungssignale 38a-e zu einem oder mehreren Spannungssignalen 38 je detektiertem Häckselmesser 8 zusammengefasst werden können.

In der Auswerteinheit 36 wird das jeweilige Spannungssignal 38a..e in ein weiterverarbeitbares Spannungssignal 49a..e umgerechnet. Dieses weiterverarbeitbare Spannungssignal 49a..e wird in der Weise gebildet, dass zunächst für ein scharfes, nicht verschlissenes Häckselmesser 8 die induzierte Spannung 38, der sogenannte Sollwert 38 der induzierten Spannung ermittelt wird, sodann im Betrieb des Häckselmessers 8 die sich verschleißbedingt ändernde Induktionsspannung 38a..e ermittelt wird und schließlich aus der Differenz der verschleißbedingten Änderung der Induktionsspannung 38a..e minus des Sollwertes 38 der induzierten Spannung eines nicht verschlissenen Häckselmessers 8 die weiterverarbeitbaren Spannungssignale 49a..e ermittelt werden.

In der Auswerteinheit 36 wird sodann das jeweilige Spannungssignal 49a..e in an sich bekannter Weise mittels Frequenzanalyse 41, vorzugsweise mittels Fourier-Analyse 47, in seine Frequenzanteile 42, vorzugsweise Schwingungsdauer oder Phase 43 und Amplitude 44, zerlegt. Dabei wird das jeweils induzierte Spannungssignal 49a..e in Frequenzanteile 42 einer Grundschwingung 45 und in Signalverzerrungen bewirkende Frequenzanteile 42 einer überlagernden Schwingung 46 separiert. Sodann werden die separierten, eine Signalverzerrung bewirkenden Frequenzanteile 42, die sogenannte überlagernde Schwingung 46, in noch näher zu beschreibender Weise in den Zeitbereich 48 rücktransformiert und aus den rücktransformierten Frequenzanteilen 42 wird schließlich in ebenfalls noch näher zu beschreibender Weise ein Maß für die Schneidschärfe, den Verschleißzustand 39, eines Häckselmessers 8 abgeleitet.

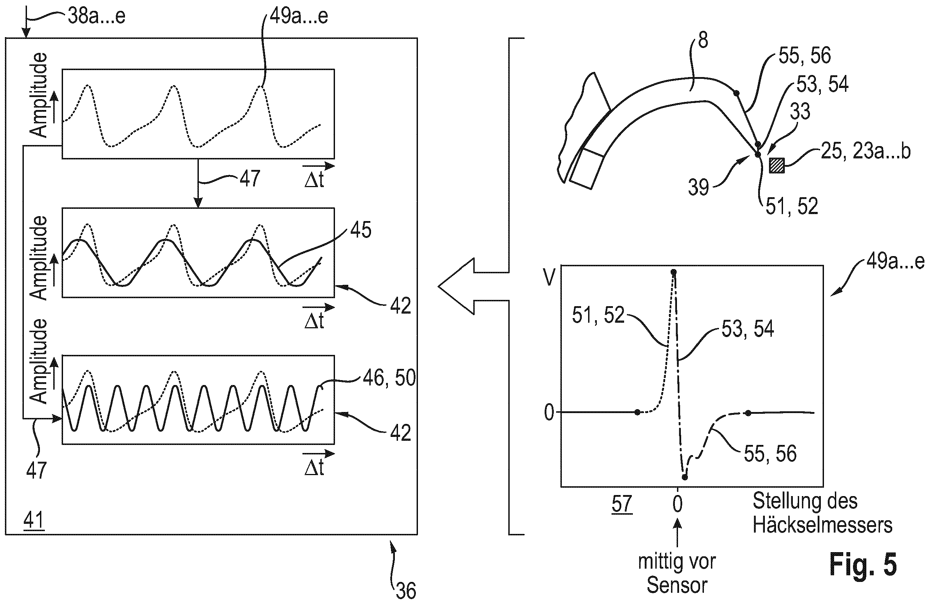

In Figur 5 ist schematisch die von der Auswerteinheit 36 vorgenommene erfindungsgemäße Frequenzanalyse 41 detailliert beschrieben. Zunächst wird das aus der induzierten Spannung 38a-e jeweils abgeleitete Spannungssignal 49a-e in der beschriebenen Weise abgeleitet. Sodann wird das jeweilige Spannungssignal 49a...e mittels Fourier-Analyse 47 in seine Frequenzanteile 42 zerlegt, wobei hier wie bereits beschrieben eine Grundschwingung 45 und eine oder mehrere die Signalverzerrungen bewirkende überlagernde Schwingungen 46, die sogenannten Oberschwingungen 50, separiert werden. Bewegt sich nun ein Häckselmesser 8 an der als Induktionssensor 25 ausgeführten Sensoranordnung 23a..b vorbei, so ändert das jeweilige Häckselmesser 8 die Permeabilität im Luftspalt 33 vor der Sensoranordnung 23a..b. Folglich ändert sich die magnetische Induktion. Diese Änderung lässt sich mithilfe der jeweils induzierten Spannung 38 a..e messen. Ein typisches Häckselmesser 8, unabhängig davon, ob seine Querschnittsform gewölbt oder eben gestaltet ist, umfasst im Wesentlichen drei charakteristische Bereiche. Der erste Bereich 51 definiert die Rundheit der Messerspitze 52 und wird von deren Radius bestimmt, wobei ein Häckselmesser 8 umso schärfer ist je geringer dieser Radius ausfällt. Einen weiteren Bereich 53 definiert die sogenannte Schleifflächenlänge 54, wobei hier eine zunehmende Schleifflächenlänge 54 ein Maß für einen zunehmenden Verschleiß 39 des jeweiligen Häckselmessers 8 ist. Schließlich wird als dritter Bereich 55 der sogenannte Messerrücken 56 unterschieden, dessen Form und Beschaffenheit als Maß zur Beschreibung des allgemeinen Verschleißzustandes 39 des jeweiligen Häckselmessers 8 herangezogen werden kann. Aus Vereinfachungsgründen werden im Folgenden der allgemeine Verschleißzustand und der Verschleiß einheitlich als Verschleiß 39 bezeichnet.

Für das im dargestellten Ausführungsbeispiel gewölbt ausgeführte Häckselmesser 8 ergibt sich das in Figur 5 rechts unten dargestellte Spannungssignal 49a..e, wobei das Spannungssignal 49a...e hier über der Winkelstellung 57 des Häckselmessers 8 zur jeweiligen Sensoranordnung 23 a..b dargestellt ist und die Winkelstellung 0° die mittige Positionierung des Häckselmessers 8 vor der jeweiligen Sensoranordnung 23a..b beschreibt.

Es ist zu erkennen, dass die beschriebenen charakteristischen Bereiche 51, 53, 55 unterschiedlich hohe Spannungen 49a..e induzieren, wobei der die Rundheit der Messerspitze beschreibende Bereich 51, 52 insgesamt die höchsten Spannung 49a..e induziert. Zugleich ist erkennbar, dass die Größe des Luftspaltes 33 einen Einfluss auf die induzierte Spannung 49a..e hat, wobei erwartungsgemäß der Wert der induzierten Spannung 49a..e mit zunehmenden Luftspalt 33 abnimmt. Die Signalform der induzierten Spannung 49a..e wird für jedes Messer akquiriert und separiert. Dies bedeutet, dass für jedes Häckselmesser 8 in Abhängigkeit von der Gestalt der Sensoranordnung 23a..b mehrere Spannungssignale 49a..e zur Verfügung stehen. Gemäß Figur 3 generiert jeder magnetische Pol 30 der Polanordnung 27 eine induzierte Spannung 38a..e. Diese induzierten Spannungen 38a..e werden sodann nach Umrechnung in die beschriebenen Spannungssignale 49a..e in der Auswerteinheit 36 der Frequenzanalyse 41 mittels Fourier-Analyse 47 unterzogen. Wie bereits beschrieben separiert die Fourier-Analyse 47 diese Spannungssignale 49a..e in Frequenzanteile 42 einer Grundschwingung 45 und Frequenzanteile 42 einer oder mehrerer die Signalverzerrungen bewirkenden überlagernden Schwingungen 46, die sogenannten Oberschwingungen 50.

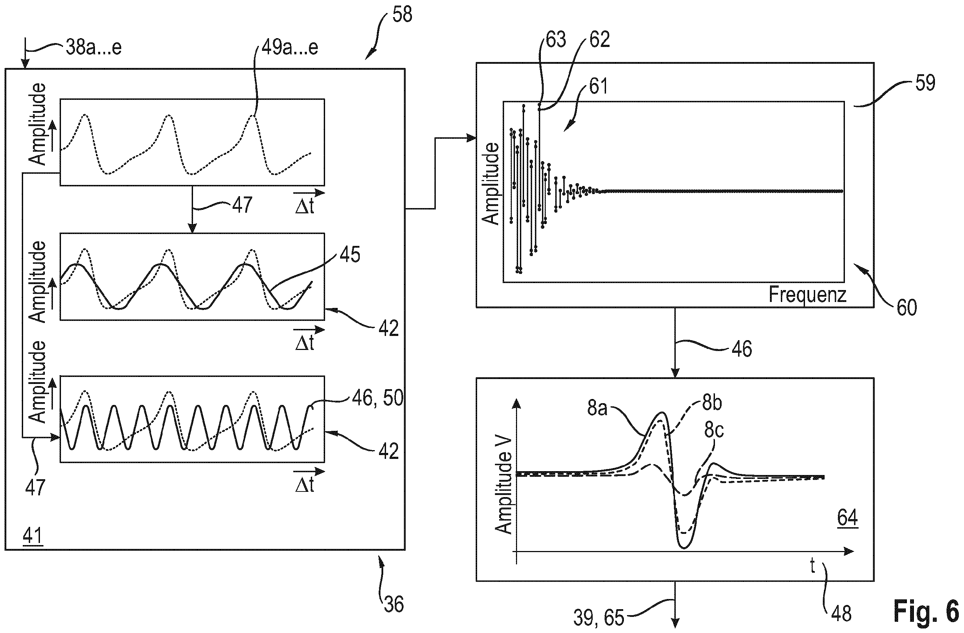

Figur 6 beschreibt die einzelnen Schritte der Frequenzanalyse 41 im Detail. Im ersten Analyseschritt 58 werden in der bereits beschriebenen Weise die induzierten Spannungen 38a..e als Spannungssignale 49a..e einer Fourier-Analyse 47 unterzogen und die Grundschwingung 45 sowie die überlagernde Schwingung 46, etwa eine oder mehrere der Oberschwingungen 50 ermittelt. Die in einem weiteren Analyseschritt 59 dargestellte Frequenzanalyse 60 unabhängig davon, ob es sich um eine Grundschwingung 45 oder eine überlagernde Schwingung 46 handelt, zeigt, dass sich die Amplituden 61 scharfer Messer 62 von denen stumpfer Messer 63 nur unwesentlich unterscheiden. In dem folgenden Analyseschritt 64 wird sodann die ermittelte Grundschwingung 45 nicht mehr berücksichtigt und nur die eine Signalverzerrung bewirkenden Frequenzanteile 42 der überlagernden Schwingungen 46 werden in den Zeitbereich 48 rücktransformiert. Das Ergebnis dieser Rücktransformation ist in Analyseschritt 64 am Beispiel von drei Häckselmessern 8 mit unterschiedlich langer Häckselleistung beispielhaft visualisiert. Häckselmesser 8a hat dabei die größte Häckselleistung erbracht, während Häckselmesser 8b ca. 40 % und Häckselmesser 8c nur ca. 10 % der Häckselleistung von Häckselmesser 8a erbracht haben. Mithin kann aus den rücktransformierten Frequenzanteilen 42 der überlagernden Schwingungen 46 auf den Verschleißzustand 39 und damit auf die Schneidschärfe 65 eines jeden Häckselmesser 8 geschlossen werden.

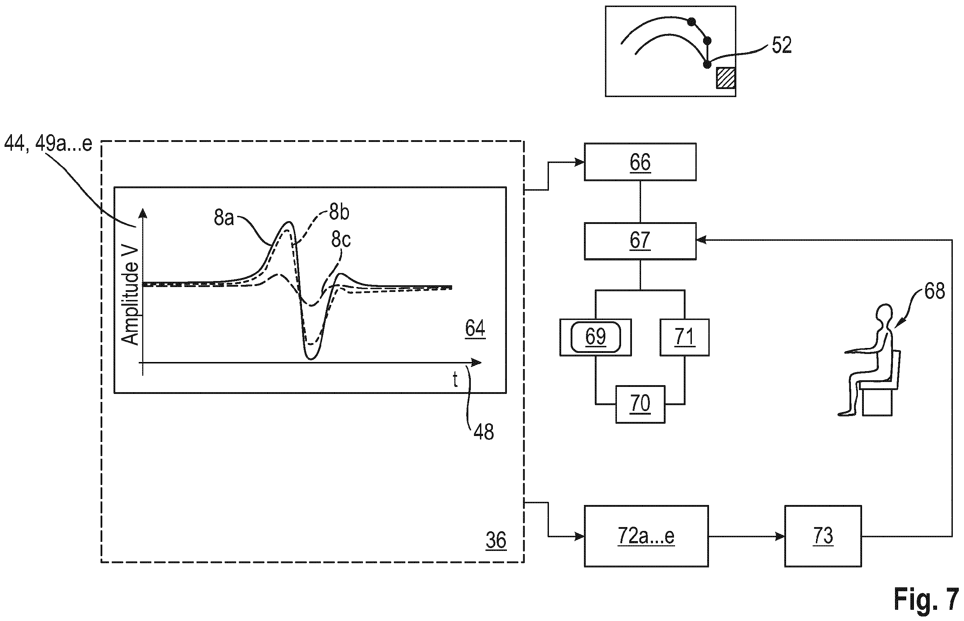

Figur 7 zeigt nun schematisch die Umsetzung einer Schneidschärfenregelung. Die Amplitude 44 der jeweils induzierten Spannung 38a..e und das daraus jeweils abgeleitete Spannungssignal 49a..e bildet, wie bereits erläutert, ein Maß für den Verschleißzustand 39 und analog die Schneidschärfe 65 eines Häckselmessers 8. Üblicher Weise gilt ein Häckselmesser 8 dann als scharf, wenn die Rundheit (der Radius) der Messerspitze 52 ca. 0,04 mm beträgt. Die in Figur 7 beispielhaft dargestellten Amplituden 44 der Häckselmesser 8a..c entsprechen Radien der Messerspitze 52 von ca. 0,1 mm - 0,25mm - 0,6mm, wobei eine zunehmender Rundheit 52 einem zunehmendem Verschleiß 39 und einer abnehmenden Schneidschärfe 65 entspricht. Im einfachsten Fall kann nun in der Auswerteinheit 36 oder in einer sonstigen Datenverarbeitungseinrichtung, auch externen Datenverarbeitungseinrichtung, ein Sollwert "scharfes Messer" 66 hinterlegt sein, wobei dies im einfachsten Fall ein hinterlegter Sollwert 66 der Amplitude 44 der induzierten Spannung 38a..e, 49a..e ist. Wird der Sollwert 66 unterschritten, wird sodann ein Schleifsignal 67 generiert, wobei hier, wie nachfolgend ausgeführt, verschiedene Arten der Generierung dieses Schleifsignals 67 denkbar sind. Im einfachsten Fall kann einem Bediener 68 an einem Display 69 visualisiert werden, welches oder welche Häckselmesser 8 den Schwellwert "scharfes Messer" unterschritten haben. In diesem Fall entscheidet der Bediener wann ein Schleifvorgang 70 der Häckselmesser 8 ausgelöst werden soll. Denkbar ist aber auch, dass eine Steuereinrichtung 71 die Einhaltung des Sollwerts "scharfes Messer" 66 überwacht und selbsttätig die Auslösung des Schleifvorganges 70 auslöst, wobei die automatische Auslösung des Schleifvorganges 70 vorzugsweise so definiert ist, dass eine Mindestzahl an Häckselmessern 8 den Sollwert 66 unterschreiten muss bevor ein Schleifvorgang 70 aktiviert wird. In an sich bekannter Weise wird hier zudem berücksichtigt, dass sich der Feldhäcksler 2 nicht in einem Arbeitsmodus befindet, in dem Erntegut 5 durch den Feldhäcksler 2 bewegt wird.

Alternativ oder zusätzlich kann die Beurteilung des Verschleißzustandes 39 oder der Schneidschärfe 65 auch an Bewertungskriterien 72 gekoppelt sein. Vorzugsweise können die Bewertungskriterien eines oder mehrere der Bewertungskriterien "Schleifflächenlänge 54 des jeweiligen Häckselmessers 8" 72a, "Rundheit der Häckselmesserspitze 52" 72b, "allgemeiner Messerverschleiß 39" 72c und/oder "Balligkeit des Häckselmessers 8" 72d bzw. "relativer Abstand der Gegenschneide 11 zum Häckselmesser 8" 72e sein. In Analogie zu dem zuvor Beschriebenen kann auch bezüglich der Bewertungskriterien 72a..e in der Auswerteinheit 36 oder in einer sonstigen Datenverarbeitungseinrichtung, auch externen Datenverarbeitungseinrichtung, ein Sollwert 73 hinterlegt sein, wobei dies im einfachsten Fall ein hinterlegter Sollwert 73 der Amplitude 44 der induzierten Spannung 38a..e, 49a..e ist. In Abhängigkeit von dem gewählten oder einzigem hinterlegten Bewertungskriterium 72a..e kann der hinterlegte Sollwert 73 sodann entweder ein Maß für den Verschleißzustand 39 des jeweiligen Häckselmessers 8 insgesamt oder die Schärfe der Schneidkante 24 sein. Wird der Sollwert 73 unterschritten, wird sodann das bereits beschriebene Schleifsignal 67 generiert, wobei hier verschiedene Arten der Generierung dieses Schleifsignals 73 denkbar sind. Im einfachsten Fall kann einem Bediener 68 an einem Display 69 visualisiert werden, welches oder welche Häckselmesser 8 den Sollwert 73 unterschritten haben. In diesem Fall entscheidet der Bediener wann ein Schleifvorgang 70 der Häckselmesser 8 ausgelöst werden soll. Denkbar ist aber auch, dass eine Steuereinrichtung 71 die Einhaltung des Sollwerts 73 überwacht und selbsttätig die Auslösung des Schleifvorganges 70 auslöst, wobei die automatische Auslösung des Schleifvorganges 70 vorzugsweise so definiert ist, dass eine Mindestzahl an Häckselmessern 8 den Sollwert 73 unterschreiten muss bevor ein Schleifvorgang 70 aktiviert wird. In an sich bekannter Weise wird hier zudem berücksichtigt, dass sich der Feldhäcksler 2 nicht in einem Arbeitsmodus befindet, indem Erntegut 5 durch den Feldhäcksler 2 bewegt wird.

Sowohl bei Unterschreitung des Sollwertes 66 als auch des Sollwertes 73 kann alternativ oder zusätzlich der Austausch eines Häckselmessers 8 vorgeschlagen werden, nämlich vorzugsweise dann, wenn der Sollwert 66, 73 in so erheblichem Maß unterschritten ist, dass dies auf ein Ende des nutzbaren Bereichs des jeweiligen Häckselmessers 8 schließen lässt.

Aufgrund dessen, dass mit zunehmender Rundheit 52 der Schneidkante 24 der Häckselmesser 8 die induzierte Spannung 38a..e, das daraus abgeleitete Spannungssignal 49a..e steigt ist vorgesehen, dass bei Wahl des Bewertungskriteriums 72b "Rundheit der Häckselmesserspitze 52" der Sollwert 73 eine Amplitude 44 des ermittelten Spannungssignals 49a..e ist.

Da mit zunehmender Schleifflächenlänge 54 des Häckselmessers 8 die Schwingungsdauer 43 der induzierten Spannung 38a..e zunimmt ist bei Wahl des Bewertungskriteriums 72a "Schleifflächenlänge 54 des jeweiligen Häckselmessers 8" der Sollwert 73 eine Schwingungsdauer 43 des abgeleiteten Spannungssignals 49a..e.

Aufgrund dessen, dass bei zunehmendem allgemeinen Verschleiß 39 des Häckselmessers 8 sowohl die Schwingungsdauer 43 als auch die Amplitude 44 der induzierten Spannung 39a..e signifikant zunehmen, ist bei Wahl des Bewertungskriteriums 72c "allgemeiner Messerverschleiß" der Sollwert 73 eine Amplitude 44 und eine Schwingungsdauer 43 des ermittelten Spannungssignals 49a..e.

Mit zunehmendem Verschleiß 39 der Häckselmesser 8 vergrößert sich deren Abstand zur Gegenschneide 11 und die Amplitude 44 der induzierten Spannung 38a..e nimmt signifikant ab, sodass bei Wahl des Bewertungskriteriums 72d, e "Balligkeit des Häckselmessers 8" bzw. "relativer Abstand der Gegenschneide 11 zum Häckselmesser 8" der Sollwert 73 eine Amplitude des ermittelten Spannungssignals 49a..e ist.

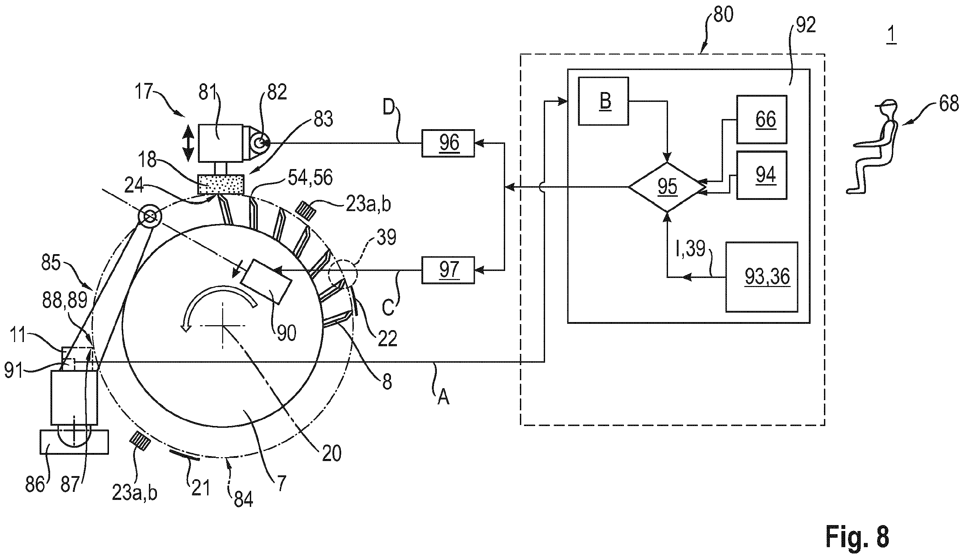

Figur 8 zeigt nun das erfindungsgemäße Fahrerassistenzsystem 80 im Detail. Wie bereits beschrieben sind der Häckseltrommel 7 im Bereich des Trommelbodens 21 und/oder der Trommelrückwand 22 Sensoranordnungen 23 a..b zugeordnet, die in der ebenfalls bereits beschriebenen Weise den Verschleißzustand 39 der Häckselmesser 8 ermitteln. In ihrem obenseitigen Bereich ist der Häckseltrommel 7 die Messerschleifeinrichtung 17 zugeordnet, wobei die Messerschleifeinrichtung 17 zumindest den Schleifstein 18, einen den Schleifstein aufnehmenden Schlitten 81 und einen den Schlitten 81 parallel zur Drehachse 20 der Häckseltrommel 7 bewegenden Stellzylinder 82 umfasst. Der Schleifstein 18 wird in an sich bekannter Weise mittels des Schlittens 81 so geführt, dass er in einer Nichtarbeitsposition seitlich der Häckseltrommel 7 positioniert ist und in der Arbeitsstellung 83 entlang der von den Häckselmessern 8 bei Drehung der Häckseltrommel 7 aufgespannten Hüllkurve 84 geführt wird, sodass der Schleifstein 18 zumindest die Schleifflächenlänge 54 des Messerrückens 56 der Häckselmesser 8 überstreicht.

In an sich bekannter Weise wird die der Häckseltrommel 7 zugeordnete Gegenschneide 11 von einem Schwenkmechanismus 85 schwenkbeweglich in einer der Gegenschneide 11 untenseitig zugeordneten Lagerung 86 geführt. Die der Häckseltrommel 7 zugewandte Kante 87 der Gegenschneide 11 ist in einem bestimmten Abstand 88, dem sogenannten Schneidspalt 89, von der Hüllkurve 84 der Häckseltrommel 7 entfernt positioniert. Weiter ist dem Schenkmechanismus 85 in ebenfalls bekannter Weise zumindest ein Stellmotor 90 zugeordnet, der eine Positionsänderung der Gegenschneide 11 und damit eine Änderung des Schneidspaltes 89 ermöglicht. Zudem nimmt die Gegenschneide 11 ein oder mehrere sogenannte Klopfsensoren 91 auf, die in der Lage sind den Abstand der Gegenschneide 11 zur Hüllkurve 84 der Häckseltrommel 7 mittels Schwingungsanalyse zu ermitteln.

Das erfindungsgemäße Fahrerassistenzsystem 80 umfasst weiter eine Überwachungseinrichtung 92. Die Überwachungseinrichtung 92 empfängt in bekannter Weise die von den Klopfsensoren 91 generierten Schallsignale A und generiert aus diesen Abstandssignale B, die dem Abstand 88 der Gegenschneide 11 zur Hüllkurve 84 der Häckseltrommel 7 entsprechen. Weiter ist die Überwachungseinrichtung 92 in der Lage Stellsignale C zur Aktivierung des oder der Stellmotoren 90 zu generieren. Zudem ist die Überwachungseinrichtung 92 so beschaffen, dass sie das Messerschleifsignal D generiert, welches das Aktivieren oder Deaktivieren der Messerschleifeinrichtung 17 bewirkt, sodass der Schleifstein 18 radial und tangential zur jeweiligen Schneidkante 24 der Häckselmesser 8 bewegt werden kann. Weiter umfasst die Überwachungseinrichtung 92 einen Modul 93, der so beschaffen ist, dass er eine Information I zum Verschleißzustand 39 jedes Häckselmessers 8 generiert. Vorzugsweise wird der Modul 93 von der zuvor beschriebenen Auswerteinheit 36 gebildet. Weiter sind in der Überwachungseinrichtung 92 der bereits beschriebene Sollwert "scharfes Messer" 66 und ein Abstandssollwert 94 für den Abstand 88 der Gegenschneide 11 von der Hüllkurve 84 der Häckseltrommel 7 hinterlegt.

Die Überwachungseinrichtung 92 umfasst zudem einen Vergleichsschritt 95 in dem die Information I zum Verschleißzustand 39 der Häckselmesser 8 und/oder das den Abstand 88 der Gegenschneide 11 zur Hüllkurve 84 der Häckselmesser 8 repräsentierende Abstandssignal B mit dem jeweiligen Sollwert, nämlich dem Sollwert "scharfes Messer" 66 und dem Abstandssollwert 94 verglichen werden. Erfindungsgemäß ist die Überwachungseinrichtung 92 in der Weise in das Fahrerassistenzsystem 80 integriert, dass das Fahrerassistenzsystem 80 selbsttätig erkennt wann ein Messerschleifvorgang 96 aktiviert oder deaktiviert werden muss und/oder eine Positionsänderung 97 der Gegenschneide 11 zu aktivieren oder deaktivieren ist. Im einfachsten Fall wird dies in der Weise bewirkt, dass in dem Vergleichsschritt 95 festgestellt wird, ob die jeweiligen Sollwerte 66, 94 unter- oder überschritten sind. Sobald dies festgestellt wird generiert das Fahrerassistenzsystem 80 in noch näher zu beschreibender Weise das Stellsignal C zur Aktivierung des oder der Stellmotoren 90 der Gegenschneide 11 zwecks Positionsänderung 97 der Gegenschneide und/oder das Messerschleifsignal D zur Aktivierung oder Deaktivierung des Schleifvorganges 96. In diesem Zusammenhang wird der Schleifvorgang 96 dann beendet, wenn in dem Vergleichsschritt 95 festgestellt wird, dass die den Verschleißzustand 39 der Häckselmesser 8 definierende Information I den hinterlegten zugehörigen Sollwert "scharfes Messer" 66 erreicht hat oder wieder übersteigt. In Analogie hierzu wird die Positionsänderung 97 der Gegenschneide 11 dann deaktiviert, wenn in dem Vergleichsschritt 95 festgestellt wird, dass der hinterlegte Abstandssollwert 94 erreicht wurde. Bezüglich des an sich bekannten Vorgangs der Bewegung der Gegenschneide 11 in die jeweilige Position wird auf die EP 2 764 767 verwiesen, auf deren Offenbarungsgehalt hier vollumfänglich Bezug genommen wird.

Weiter ist das Fahrerassistenzsystem 80 so beschaffen, dass die von diesem generierten Stellsignale C sowie die generierten Messerschleifsignale D entweder unmittelbar den Schleifvorgang 96 auslösen und beenden oder die Positionsänderung 97 der Gegenschneide 11 auslösen oder beenden. Es liegt zudem im Rahmen der Erfindung, dass die Stellsignale C und/oder die Messerschleifsignale D alternativ oder zusätzlich an einen Bediener 68 der landwirtschaftlichen Arbeitsmaschine 1 einen Hinweis zur Aktivierung oder Deaktivierung des Schleifvorgangs 96 und/oder der Positionsänderung 97 der Gegenschneide 11 generieren.

Weiter liegt es im Rahmen der Erfindung, dass der in der Überwachungseinrichtung 92 hinterlegten Sollwert 66 "scharfes Messer" und der Abstandssollwert 94 der Gegenschneide 11 erntegutabhängig änderbar ist.

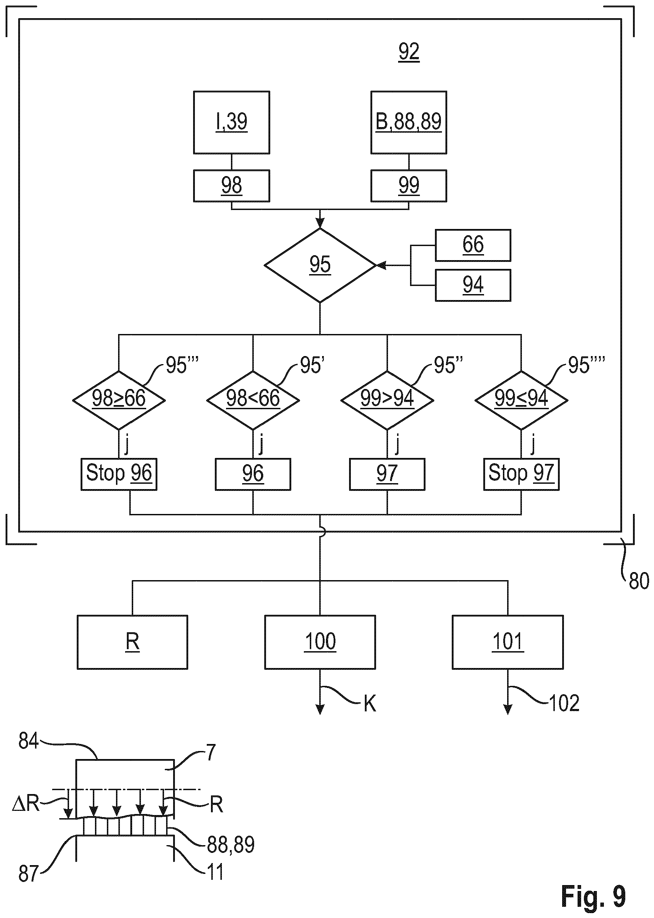

Gemäß Figur 9 werden die von der Überwachungseinrichtung 92 generierten Signale B, I, die eine Information I über den Verschleißzustand 39 des jeweiligen Häckselmessers 8 und/oder den Abstand 88 der Schneidkante 24 eines Häckselmessers 8 zu einer Gegenschneide 11, den sogenannten Schneidspalt 89, enthalten in einen Schneidschärfen-Istwert 98 und einen Abstandsistwert 99 der Gegenschneide 11 umgerechnet. Der jeweilige Istwert 98, 99 wird sodann in dem bereits beschriebenen Vergleichsschritt 95 mit dem jeweils hinterlegten zugehörigen Sollwert, dem Sollwert "scharfes Messer" 66 oder dem Abstandssollwert 94, verglichen. Unterschreitet in dem Vergleichsschritt 95' der Schneidschärfen-Istwert 98 den Sollwert "scharfes Messer" 66 wird der Schleifvorgang 96 aktiviert. Überschreitet hingegen in dem Vergleichsschritt 95" der Abstandsistwert 99 den hinterlegten Abstandssollwert 94 wird die Positionsänderung 97 der Gegenschneide 11 in einer der bereits beschriebenen Weisen aktiviert.

Während des aktivierten Schleifvorganges 96 wird der Schneidschärfen-Istwert 98 überwacht. Erreicht oder überschreitet in dem Vergleichsschritt 95'" der Schneidschärfen-Istwert 98 den Sollwert "scharfes Messer" 66 wird der Schleifvorgang 96 deaktiviert. Das jeweilige Häckselmesser 8 gilt als scharf. Erreicht oder unterschreitet hingegen in dem Vergleichsschritt 95"" der Abstandsistwert 99 den hinterlegten Abstandssollwert 94 wird die Positionsänderung 97 der Gegenschneide 11 in einer der bereits beschriebenen Weisen deaktiviert, da die Gegenschneide 11 ihre in der Überwachungseinrichtung 92 hinterlegte Position, den vordefinierten Schneidspalt 89, erreicht hat.

Damit ist die Überwachungseinrichtung 92 so beschaffen, dass sie für jedes Häckselmesser 8 die Schneidschärfe 65 und/oder den Verschleißzustand 39 und/oder die Größe des Schneidspaltes 89 überwacht.

Zugleich ist das Fahrerassistenzsystem 80 so beschaffen, dass aus den von der Überwachungseinrichtung 92 generierten Abstandsignalen B ein Radius R der Häckseltrommel 7 ermittelt wird. Aufgrund dessen, dass das Abstandssignal B den Abstand 88 der Gegenschneide 11, der Kante 87 der Gegenschneide 11 zur Hüllkurve 84, dem Abstand der Schneidkante 24 eines Häckselmessers 8 zur Gegenschneide 11, beschreibt, kann aus diesem Abstandsignal B auf eine Änderung des Radius ΔR der Häckseltrommel 7 geschlossen werden.

Weiter ist das Fahrerassistenzsystem 80 eingerichtet, aus den von der Überwachungseinrichtung 92 generierten häckselmesser-spezifischen Signalen, etwa den Schallsignalen A und/oder den Abstandsignalen B und/oder den Informationen I bezüglich des Verschleißzustandes 39 auf die Anzahl 100 der auf einer Häckseltrommel 7 positionierten Häckselmesser 8 zu schließen. Aus der ermittelten Anzahl 100 von Häckselmessern 8 wird sodann ein Konfigurationssignal K generiert, welches in dem Fahrerassistenzsystem 80 automatisch die jeweils verwendete Häckseltrommel 7 konfiguriert.

In einer weiteren vorteilhaften Ausgestaltung kann beispielsweise aus der detektierten Änderung des Radius ΔR der Häckseltrommel 7 in einem weiteren Auswertschritt 101 auf einen gutzufuhrbedingten Verschleißzustand 102 geschlossen und Maßnahmen abgeleitet werden, eine verschleißmindernde Gutzufuhr zu bewirken. Insbesondere können die abgeleiteten Maßnahmen eine Änderung eines oder mehrerer Parameter des Erntevorsatzes 3 und/oder dieser nachgeordneten Einzugs- und Vorpresswalzen 4 zur Aufnahme und Weiterleitung von Erntegut 5 umfassen.

**Bezugszeichenliste:**

| | | | |
|---|---|---|---|
| 1 | landwirtschaftliche Arbeitsmaschine | 33 | Luftspalt |
| 2 | Feldhäcksler | 34 | Magnetkreis |
| 3 | Erntevorsatz | 35 | Messanordnung |
| 4 | Einzugs- und Vorpresswalzen | 36 | Auswerteinheit |
| 5 | Erntegutstrom | 37 | magnetische Messgröße |
| 6 | Häckseleinrichtung | 38 | Sollwert induzierte Spannung |
| 7 | Häckseltrommel | 38a. e | induzierte Spannung |
| 8 | Häckselmesser | | |
| 9 | Häckselmesseranordnung a...b | 39 | Verschleißzustand |
| 10 | Einzugsbereich | 40 | Drehrichtung |
| 11 | Gegenschneide | 41 | Frequenzanalyse |
| 12 | Cracker | 42 | Frequenzanteil |
| 13 | Nachzerkleinerungseinrichtung | 43 | Schwingungsdauer/Phase |
| 14 | Nachbeschleunigungseinrichtung | 44 | Amplitude |
| 15 | Auswurfkrümmer | 45 | Grundschwingung |
| 16 | Auswurfkrümmerklappe | 46 | überlagernde Schwingung |
| 17 | Messerschleifeinrichtung | 47 | Fourier-Analyse |
| 18 | Schleifstein | 48 | Zeitbereich |
| 19 | | 49 | Spannungssignal a...e |
| 20 | Drehachse Häckseltrommel | 50 | Oberschwingung |
| 21 | Trommelboden | 51 | erster Bereich |
| 22 | Trommelrückwand | 52 | Rundheit der Messerspitze |
| 23 | Sensoranordnung a...b | 53 | weiterer Bereich |
| 24 | Schneidkante | 54 | Schleifflächenlänge |
| 25 | Induktionssensor | 55 | dritter Bereich |
| 26 | magnetische Erregeranordnung | 56 | Messerrücken |
| 27 | Polanordnung | 57 | Winkelstellung |
| 28 | Erfassungsanordnung | 58 | erster Analyseschritt |
| 29 | Flussleiteinrichtung | 59 | weiterer Analyseschritt |
| 30 | magnetischer Pol | 60 | Frequenzanalyse |
| 31 | Polfläche | 61 | Amplitude |
| 32 | Luftspaltanordnung | 62 | scharfes Messer |
| | | 94 | Abstandssollwert |
| 63 | stumpfes Messer | 95 | Vergleichsschritt |
| 64 | Analyseschritt | 96 | Messerschleifvorgang |
| 65 | Schneidschärfe | 97 | Positionsänderung |
| 66 | Sollwert "scharfes Messer" | 98 | Schneidschärfe-Istwert |
| 67 | Schleifsignal | 99 | Abstandsistwert |
| 68 | Bediener | 100 | Anzahl Häckselmesser |
| 69 | Display | 101 | Auswertschritt |
| 70 | Schleifvorgang | 102 | Verschleißzustand |
| 71 | Steuereinrichtung | | |
| 72 | Bewertungskriterium a..e | | |
| 73 | Sollwert | | |
| | | | |
| 80 | Fahrerassistenzsystem | | |
| 81 | Schlitten | | |
| 82 | Stellzylinder | L1..L4 | Abschnitte |
| 83 | Arbeitsstellung | A | Schallsignal |
| 84 | Hüllkurve | B | Abstandssignal |
| 85 | Schwenkmechanismus | C | Stellsignal |
| 86 | Lagerung | D | Messerschleifsignal |
| 87 | Kante | I | Information Verschleißzustand |
| 88 | Abstand | R | Radius |
| 89 | Schneidspalt | □R | Änderung Radius |
| 90 | Stellmotor | K | Konfigurationssignal |
| 91 | Klopfsensor | | |
| 92 | Überwachungseinrichtung | | |
| 93 | Modul | | |

## Patentansprüche

1. Fahrerassistenzsystem (80) einer als Feldhäcksler (2) ausgeführten landwirtschaftlichen Arbeitsmaschine (1), wobei die landwirtschaftliche Arbeitsmaschine (1) einen Erntevorsatz (3) zur Aufnahme von Erntegut (5), eine Häckseleinrichtung (6) zumindest bestehend aus einer Häckseltrommel (7) und dieser zugeordneten Häckselmessern (8) zum Zerkleinern des Erntegutes (5), und eine Überwachungseinrichtung (92) umfasst, wobei die Überwachungseinrichtung (92) betreibbar ist, ein Signal zu erzeugen, das zumindest eine Information (I) über den Verschleißzustand (39) des jeweiligen Häckselmessers (8) und/oder den Abstand (88) der Schneidkante (24) eines Häckselmessers (8) zu einer Gegenschneide (11) enthält, wobei weiter die Information (I) zum Verschleißzustand (39) der Häckselmesser (8) und/oder der Abstand (88) der Schneidkante (24) eines Häckselmessers (8) zur Gegenschneide (11) mit jeweils einem Sollwert (66,94) verglichen wird und wobei die landwirtschaftliche Arbeitsmaschine (1) weiter Aktivierungseinrichtungen zur Aktivierung und Deaktivierung eines Messerschleifvorganges (70) und Mittel zur Positionsänderung (97) der Gegenschneide (11) umfasst
**dadurch gekennzeichnet, dass**
die Überwachungseinrichtung (92) in der Weise in das Fahrerassistenzsystem (80) integriert ist, dass das Fahrerassistenzsystem (80) selbsttätig erkennt wann ein Messerschleifvorgang (96) aktiviert oder deaktiviert werden muss und/oder eine Positionsänderung (97) der Gegenschneide (11) zu aktivieren oder deaktivieren ist.

2. Fahrerassistenzsystem einer als Feldhäcksler ausgeführten landwirtschaftlichen Arbeitsmaschine nach Anspruch 1,
**dadurch gekennzeichnet, dass**
das Fahrerassistenzsystem (80) den Messerschleifvorgang (96) und/oder die Positionsänderung (97) der Gegenschneide (11) aktiviert oder deaktiviert oder an einen Bediener (68) der landwirtschaftlichen Arbeitsmaschine (1) einen Hinweis zur Aktivierung oder Deaktivierung des Messerschleifvorgangs (96) und/oder der Positionsänderung (97) der Gegenschneide (11) generiert.

3. Fahrerassistenzsystem einer als Feldhäcksler ausgeführten landwirtschaftlichen Arbeitsmaschine nach einem der vorhergehenden Ansprüche,
**dadurch gekennzeichnet, dass**
die von der Überwachungseinrichtung (92) generierten Signale (I, B), die eine Information (I) über den Verschleißzustand (39) des jeweiligen Häckselmessers (8) und/oder den Abstand (88, 89) der Schneidkante (24) eines Häckselmessers (8) zu einer Gegenschneide (11) enthalten in einen Schneidschärfe-Istwert (98) und einen Abstandsistwert (99) der Gegenschneide (11) umgerechnet werden und der jeweilige Istwert (98, 99) mit dem hinterlegten zugehörigen Sollwert (66,94) verglichen wird und bei Unterschreitung des Sollwertes "scharfes Messer" (66) oder bei Überschreitung des Abstandssollwertes (94) der Messerschleifvorgang (96) oder die Positionsänderung (97) der Gegenschneide (11) aktiviert werden.

4. Fahrerassistenzsystem einer als Feldhäcksler ausgeführten landwirtschaftlichen Arbeitsmaschine nach einem der Ansprüche 1 und 2,
**dadurch gekennzeichnet, dass**
die von der Überwachungseinrichtung (92) generierten Signale (I, B), die eine Information (I) über den Verschleißzustand (39) des jeweiligen Häckselmessers (8) und/oder den Abstand (88, 89) der Schneidkante (24) eines Häckselmessers (8) zu einer Gegenschneide (11) enthalten in einen Schneidschärfen-Istwert (98) und einen Abstandsistwert (99) der Gegenschneide (11) umgerechnet werden und der jeweilige Istwert (98, 99) mit dem hinterlegten zugehörigen Sollwert (66, 94) verglichen wird und bei Erreichen oder Überschreitung des Sollwertes "scharfes Messer" (66) oder bei Erreichen oder Unterschreitung des Abstandssollwertes (94) der Messerschleifvorgang (96) oder die Positionsänderung (97) der Gegenschneide (11) deaktiviert werden.

5. Fahrerassistenzsystem einer als Feldhäcksler ausgeführten landwirtschaftlichen Arbeitsmaschine nach einem der vorhergehenden Ansprüche,
**dadurch gekennzeichnet, dass**
der Sollwert "scharfes Messer" (66) und der Abstandssollwerte (94) der Gegenschneide (11) erntegutartabhängig änderbar sind.

6. Fahrerassistenzsystem einer als Feldhäcksler ausgeführten landwirtschaftlichen Arbeitsmaschine nach einem der vorhergehenden Ansprüche,
**dadurch gekennzeichnet, dass**
die Überwachungseinrichtung (92) für jedes Häckselmesser (8) die Schneidschärfe (65) und/oder den Verschleißzustand (39) und/oder die Größe des Schneidspaltes (89) überwacht.

7. Fahrerassistenzsystem einer als Feldhäcksler ausgeführten landwirtschaftlichen Arbeitsmaschine nach einem der vorhergehenden Ansprüche,
**dadurch gekennzeichnet, dass**
aus den von der Überwachungseinrichtung (92) generierten Abstandsignalen (B) ein Radius (R, ΔR) der Häckseltrommel (7) ermittelt wird.

8. Fahrerassistenzsystem einer als Feldhäcksler ausgeführten landwirtschaftlichen Arbeitsmaschine nach einem der vorhergehenden Ansprüche,
**dadurch gekennzeichnet, dass**
aus den von der Überwachungseinrichtung (82) generierten Signalen (B, I) die Anzahl der auf einer Häckseltrommel (7) positionierten Häckselmesser (8) ermittelt wird und die Konfiguration der Häckseltrommel (7) in dem Fahrerassistenzsystem (80) automatisch bewirkt wird.

9. Fahrerassistenzsystem einer als Feldhäcksler ausgeführten landwirtschaftlichen Arbeitsmaschine nach einem der vorhergehenden Ansprüche,
**dadurch gekennzeichnet, dass**
aus den von der Überwachungseinrichtung (82) generierten Signalen (B, I) auf einen gutzufuhrbedingten Verschleißzustand (102) geschlossen wird und Maßnahmen abgeleitet werden, eine verschleißmindernde Gutzufuhr zu bewirken.

10. Fahrerassistenzsystem einer als Feldhäcksler ausgeführten landwirtschaftlichen Arbeitsmaschine nach Anspruch 9,
**dadurch gekennzeichnet, dass**
die abgeleiteten Maßnahmen eine Änderung eines oder mehrerer Parameter des Erntevorsatzes (3) zur Aufnahme von Erntegut (5) und/oder diesem nachgeordneten Einzugs- und Vorpresswalzen (4) beinhalten.

11. Fahrerassistenzsystem einer als Feldhäcksler ausgeführten landwirtschaftlichen Arbeitsmaschine nach einem der vorhergehenden Ansprüche,
**dadurch gekennzeichnet, dass**
die Überwachungseinrichtung eine Erfassungsanordnung (28) zur Erfassung eines Verschleißzustands (39) einer Häckselmesseranordnung (9a..b) einer zur Verarbeitung eines Gutstroms (5) vorgesehenen Häckseleinrichtung (6) umfasst, wobei die Häckseleinrichtung (6) eine umlaufende, die Häckselmesseranordnung (9a..b) aufnehmende Häckseltrommel (7) sowie mindestens eine Gegenschneide (11), die mit den Häckselmessern (8) zusammenwirkt, aufweist,
wobei die Erfassungsanordnung (28) mindestens eine Sensoranordnung (23a..b) aufweist, die eine magnetische Erregeranordnung (26) und eine damit magnetisch gekoppelte Flussleiteinrichtung (29) aufweist, wobei die Sensoranordnung (23a..b) eine Polanordnung (27) bereitstellt, die mindestens einen magnetischen Pol (30) mit einer Polfläche (31) zum Ausleiten von Magnetfluss ausbildet
wobei bei einer Drehung der Häckseltrommel (7) zumindest ein Teil der Häckselmesser (8) die Polanordnung (27) passiert, das die Polanordnung (27) jeweils passierende Häckselmesser (8) eine Luftspaltanordnung (32) mit mindestens einem Luftspalt (33) zu der Polanordnung (27) hin ausbildet und dadurch mindestens ein von der Erregeranordnung (26) erregter Magnetkreis (34) über das jeweilige Häckselmesser (8) geschlossen wird
wobei die Erfassungsanordnung (28) eine Messanordnung (35) und eine Auswerteeinheit (36) aufweist, wobei die Messanordnung (35) mindestens eine magnetische Messgröße (37) betreffend den Magnetfluss in mindestens einem von der Erregeranordnung (26) erregten Magnetkreis (34) erfasst und die Auswerteeinheit (36) aus der mindestens einen erfassten Messgröße (37) den Verschleißzustand (39) des jeweiligen Häckselmessers (8) ermittelt.

12. Fahrerassistenzsystem einer als Feldhäcksler ausgeführten landwirtschaftlichen Arbeitsmaschine nach Anspruch 11,
**dadurch gekennzeichnet, dass**
die beim Überstreichen der Sensoranordnung (23a..b) durch eine Häckselmesseranordnung (9a..b) induzierte Spannung (38a..e) die magnetische Messgröße (37) bildet und die Erfassungsanordnung (28) die induzierte Spannung (38a..e) ermittelt und als Spannungssignal (49a..e) aufzeichnet,
das Spannungssignal (49a..e) in der Auswerteinheit (36) mittels Frequenzanalyse (41) in seine Frequenzanteile (42) zerlegt wird
die Frequenzanteile (42) in Frequenzanteile (42) einer Grundschwingung (45) und in Signalverzerrungen bewirkende Frequenzanteile (42) einer überlagernden Schwingung (46) separiert werden,
wobei die separierten, eine Signalverzerrung bewirkenden Frequenzanteile (42) der überlagernden Schwingung (46) in den Zeitbereich (48) rücktransformiert werden und aus den rücktransformierten Frequenzanteilen (42) der überlagernden Schwingung (46) ein Maß für den Verschleißzustand (39) und/oder die Schneidschärfe (65) eines Häckselmessers (8) abgeleitet wird.

13. Fahrerassistenzsystem einer als Feldhäcksler ausgeführten landwirtschaftlichen Arbeitsmaschine nach einem der vorhergehenden Ansprüche,
**dadurch gekennzeichnet, dass**
die eine Sensoranordnung (23a..b) oder die mehreren Sensoranordnungen (23a..b) so am Umfang der Häckseltrommel (7) positioniert sind, dass jedes Häckselmesser (8) der Häckseltrommel (7) durch eine Sensoranordnung (23a..b) detektiert wird, vorzugsweise dass der Häckseltrommel (7) rechts- und linksseitige Häckselmesseranordnungen (9a..b) zugeordnet sind und jeder dieser Häckselmesseranordnungen (9a..b) zumindest eine Sensoranordnung (23a..b) zugeordnet ist.

14. Fahrerassistenzsystem einer als Feldhäcksler ausgeführten landwirtschaftlichen Arbeitsmaschine nach einem der vorhergehenden Ansprüche,
**dadurch gekennzeichnet, dass**
jeder Sensoranordnung (23a..b) eine Vielzahl von Induktionssensoren (25), vorzugsweise 5 Induktionssensoren (25), zugeordnet sind und jeder Induktionssensor (25) ein Spannungssignal (49a..e) generiert, wobei vorzugsweise jedes der generierten Spannungssignale (49a..e) separat analysiert wird und wobei weiter vorzugsweise mehrere oder alle Spannungssignale (49a..e) eines detektierten Häckselmessers (8) vor einer Analyse zu einem oder mehreren Spannungssignalen (49a..e) zusammengefasst werden.

15. Fahrerassistenzsystem einer als Feldhäcksler ausgeführten landwirtschaftlichen Arbeitsmaschine nach einem der vorhergehenden Ansprüche,
**dadurch gekennzeichnet, dass**
die Frequenzanalyse (41) des Spannungssignals (49a..e) mittels Fourier-Analyse (47) erfolgt, vorzugsweise, dass mittels Fourier-Analyse (47) das jeweilige Spannungssignal (49a..e) in Frequenzanteile (42) einer Grundschwingung (45) und eine Signalverzerrungen bewirkende Frequenzanteile (42) einer überlagernden Schwingung (46) klassifiziert wird und wobei die die Grundschwingung (45) repräsentierenden Frequenzanteile (42) bei der Ableitung des Verschleißzustandes (39) und/oder der Schneidschärfe (65) des jeweiligen Häckselmessers (8) nicht berücksichtigt werden.

16. Fahrerassistenzsystem einer als Feldhäcksler ausgeführten landwirtschaftlichen Arbeitsmaschine nach einem der vorhergehenden Ansprüche,
**dadurch gekennzeichnet, dass**
die Amplitude (44) des jeweiligen Spannungssignals (49a..e) der eine Signalverzerrung bewirkenden Frequenzanteile (42) ein Maß für die Beurteilung des Verschleißzustandes (39) und/oder der Schneidschärfe (65) des jeweiligen Häckselmessers (8) bildet.

17. Fahrerassistenzsystem einer als Feldhäcksler ausgeführten landwirtschaftlichen Arbeitsmaschine nach Anspruch 16,
**dadurch gekennzeichnet, dass**
die Beurteilung der Schneidschärfe (65) und/oder des Verschleißzustandes (39) mittels Bewertungskriterien (72) erfolgt, wobei die Bewertungskriterien (72) eines oder mehrere der Bewertungskriterien "Schleifflächenlänge des jeweiligen Häckselmessers" (72a), "Rundheit der Häckselmesserspitze" (72b), "allgemeiner Messerverschleiß" (72c) und/oder "Balligkeit des Häckselmessers" (72d) bzw. "relativer Abstand der Gegenschneide zum Häckselmesser" (72e) sind.
